# EUROPÄISCHE PATENTANMELDUNG

(11) **EP 2 984 971 A1**
(43) Veröffentlichungstag der Anmeldung: **17.02.2016**
(21) Anmeldenummer: 15176396.8
(22) Anmeldetag: 13.07.2015
(51) Int. Cl.: A47J 31/44, A47J 31/46, B67B 7/00

(54) **MILCHLANZE MIT EINEM MESSERELEMENT**

(30) Priorität: 11.08.2014 DE 102014111391
(71) Anmelder: Miele & Cie. KG, 33332 Gütersloh (DE)
(72) Erfinder: Schweer, Nico, 33330 Gütersloh (DE)

(57) **Zusammenfassung**

Die vorliegende Erfindung betrifft eine Milchlanze (2) für einen Kaffeeautomaten (1), mit einem Ansaugrohr (24), das von einem Anschlussende (251) in eine Längsrichtung (41) zu einem Entnahmeende (252) verläuft, und mit einem Messerelement (23), wobei das Messerelement (23) entlang dem Ansaugrohr verschiebbar ist. Die vorliegende Erfindung betrifft weiterhin einen Kaffeeautomaten (1) mit einer solchen Milchlanze (2).

## Beschreibung

### Stand der Technik

Die vorliegende Erfindung betrifft eine Milchlanze für einen Kaffeeautomaten, mit einem Ansaugrohr, das von einem Anschlussende in eine Längsrichtung zu einem Entnahmeende verläuft, und mit einem Messerelement. Die vorliegende Erfindung betrifft weiterhin einen Kaffeeautomaten mit einer solchen Milchlanze.

Kaffeeautomaten, insbesondere Kaffeevollautomaten, verfügen häufig über die Möglichkeit, dem Kaffeegetränk Milch oder Milchschaum beizufügen. Dafür ist eine zumeist flexibel ausgebildete Milchleitung vorgesehen, die an einen Milchbehälter angeschlossen wird, um die Milch anzusaugen und der Getränkezubereitung zu zuführen. Um einen Umfüllvorgang der Milch in den Milchbehälter zu vermeiden, wird die Milch aber häufig auch direkt ihrer Milchverpackung entnommen. Die Milchleitung wird dafür in die Milchverpackung eingeführt. Dabei wird sie von außen mit der Milch benetzt.

Eine Entnahme der Milchleitung ist erforderlich, wenn beispielsweise die Milchverpackung entleert ist, die Milch in einem Kühlschrank gekühlt werden soll, oder die Milchleitung gespült werden muss. Bei einer solchen Entnahme werden die Hände des Nutzers jedoch durch die außen an der Milchleitung anhaftende Milch verschmutzt. Ferner besteht bei Berührung der Milchleitung die Gefahr, dass diese außenseitig mit Bakterien oder Schmutz versehen wird, wodurch beim Eintauchen in den Milchbehälter diese in die Milch gelangen.

Die Druckschrift DE 20 2010 006 358 U1 offenbart ein Ansaugröhrchen, dass als Anschlussvorrichtung für Einweggetränkekartonverpackungen, beispielsweise für Milchverpackungen, dient. Das Ansaugröhrchen weist eine feste Länge auf. Zudem weist es ein unteres, spitzes Ende auf, das in die Milchverpackung eingestochen werden kann, sowie ein oberes Ende, an das ein Milchansaugschlauch anschließbar ist. Um den Boden der Milchverpackung nicht zu beschädigen, ist am oberen Ende ein Begrenzer vorgesehen, der das Einführen des Ansaugröhrchens begrenzt. Das Röhrchen kann daher nicht in die Milchverpackung hinein rutschen. Zudem berührt das spitze Ende den Boden nicht, wenn die Milchverpackung höher als die Länge des Ansaugröhrchens ist. Jedoch kann die Milch der Milchverpackung dann auch nicht vollständig entnommen werden. Bei einer weniger hohen Milchverpackung besteht die Gefahr, dass das spitze Ende den Boden berührt und beschädigt, so dass Milch ausläuft. Und bei der Handhabung des Ansaugröhrchens besteht eine erhöhte Gefahr, dass sich der Benutzer an dem spitzen Ende verletzt.

### Offenbarung der Erfindung

Aufgabe der vorliegenden Erfindung ist es, eine Milchlanze für einen Kaffeeautomaten, insbesondere einen Kaffeevollautomaten, zu schaffen, die sowohl für herkömmliche, in Kaffeeautomaten genutzte Milchbehälter als auch für Milchverpackungen nutzbar ist, die zudem den Milchbehälter oder die Milchverpackung, insbesondere ihren Boden, beim Einführen nicht ungewollt beschädigt, die ein vollständiges Entleeren ermöglicht, und die ihre Handhabung und/oder die Handhabung der Milchleitung außerdem vereinfacht.

Dafür wird eine Milchlanze geschaffen, die zum Anschluss an eine Milchleitung eines Kaffeeautomaten vorgesehen ist. Die Milchlanze weist ein Ansaugrohr auf, das sich von einem Anschlussende in eine Längsrichtung zu einem Entnahmeende erstreckt. Weiterhin weist die Milchlanze ein Messerelement auf.

Die Milchlanze zeichnet sich dadurch aus, dass das Messerelement entlang dem Ansaugrohr verschiebbar vorgesehen ist. Vorzugsweise ist es in und gegen die Längsrichtung verschiebbar. Das Messerelement ist zum Durchstechen der Wand der Milchverpackung vorgesehen. Dafür ist es bevorzugt, dass sich das Messerelement in die Längsrichtung erstreckt. Durch Verschieben des Messerelementes entlang dem Ansaugrohr ist es auf die Wand aufschiebbar und die Wand durchtrennbar.

Da das Messerelement nicht am Entnahmeende des Ansaugrohrs angeordnet ist, besteht keine Gefahr, dass ein Boden der Milchverpackung beim Einführen der Milchlanze in die Milchverpackung ungewollt beschädigt wird und Milch austritt. Zudem ist die Gefahr, dass sich ein Nutzer an dem Messerelement verletzt, dadurch geringer.

Das Messerelement weist bevorzugt eine Durchgangsbohrung zur Aufnahme des Ansaugrohrs auf. In dieser Ausführungsform umgibt es das Ansaugrohr vollumfänglich. Dadurch wird die Wand bei einem Verschieben des Messerelementes entlang dem Ansaugrohr vollumfänglich um das Ansaugrohr aufgetrennt. Das Ansaugrohr ist dann in die Milchverpackung einschiebbar.

Dafür weist das Messerelement bevorzugt eine scharfe Schneide auf. Um das Durchtrennen der Wand zu vereinfachen, verläuft die Schneide bevorzugt in einem Schneidewinkel größer als 0° und kleiner als 90° zur Längsrichtung, besonders bevorzugt in einem Schneidewinkel größer 30° und kleiner als 50°. Dadurch durchsticht das Messerelement die Wand zunächst punktförmig. Danach wird die Wand beim Verschieben des Messerelementes in Längsrichtung kontinuierlich weiter aufgetrennt. Der benötigte Kraftaufwand für den Nutzer dabei etwa gleichbleibend gering und das Durchtrennen der Wand daher sehr leicht möglich.

Um das Messerelement leicht handhaben zu können, weist die Milchlanze zudem einen Aufsatz auf. Der Aufsatz ist bevorzugt auf eine Wand der Milchverpackung aufsetzbar. Er weist weiterhin bevorzugt eine Durchgangsbohrung auf, die zur Aufnahme des Ansaugrohrs vorgesehen ist. In dieser Ausführungsform umgibt auch der Aufsatz das Ansaugrohr vollumfänglich. Es ist bevorzugt, dass der Aufsatz entlang dem Ansaugrohr verschieblich ist. Nach dem Aufsetzen des Aufsatzes auf die Wand der Milchverpackung ist die Milchlanze durch Verschieben des Ansaugrohres, insbesondere in Längsrichtung, an die Höhe der Milchverpackung anpassbar. Dadurch reicht das Ansaugrohr immer bis zum Boden der Milchverpackung. Die Milch ist der Milchverpackung oder dem Milchbehälter daher immer vollständig entnehmbar.

Besonders bevorzugt ist das Messerelement gemeinsam mit dem Aufsatz entlang dem Ansaugrohr verschiebbar. Die Handhabung der Milchlanze ist dadurch sehr einfach.

Dafür ist es bevorzugt, dass das Messerelement am Aufsatz angeordnet ist, oder dass es einstückig mit dem Aufsatz gefertigt ist. Dabei ist das Messerelement bevorzugt aus einem Metall, einer Metalllegierung oder einem harten Kunststoff gefertigt. Das einstückige Herstellen hat den Vorteil, dass nur ein Bauteil gefertigt und daher auch nur ein Werkzeug benötigt wird. Als Kunststoff sind besonders Polypropylene (PP), Acrynitril- Butadien-Styrol (ABS), Acrylsäureester-Styrol-Acrylnitril (ASA) - ggf. Glasfasergefüllt, geeignet, wobei das ausgewählte Material Lebensmittelechtheit und abriebfestigkeit bereitstellen muss.

Am Aufsatz sind zudem bevorzugt Rippen angeordnet, durch die er griffiger ist, so dass seine Handhabung noch weiter vereinfacht ist.

Am Anschlussende des Ansaugrohrs ist bevorzugt ein Anschlussadapter angeordnet. An den Anschlussadapter ist eine Milchleitung eines Kaffeeautomaten anschließbar. Der Anschlussadapter ist am Anschlussende bevorzugt unverschieblich oder nur sehr schwer verschieblich angeordnet, so dass er gleichzeitig einen Anschlag bildet. Dadurch kann das Ansaugrohr nicht durch den Aufsatz in die Milchverpackung oder den Milchbehälter hinein rutschen.

Zudem ist es bevorzugt, dass der Anschlussadapter verschließbar ist, beispielsweise mittels eines vom Anschlussadapter abnehmbaren Verschlussstopfens. Die Milchverpackung oder der Milchbehälter ist bei am Anschlussadapter angeordnetem Verschlussstopfen geschlossen, so dass keine oder nur wenig Luft eindringen kann und sich die Milch länger hält. Zudem ist die Milchverpackung oder der Milchbehälter in diesem Zustand in einem Kühlschrank abstellbar. Insgesamt ist der Verschlusstopfen so ausgelegt oder geformt, dass ein Nachströmen von Luft während der Milchentnahme stattfinden kann, damit kein Unterdruck im Milchbehälter entsteht bzw. die Förderung der Milch nicht behindert oder unterbunden wird.

Es ist weiterhin bevorzugt, dass in der Durchgangsbohrung zwischen dem Ansaugrohr und dem Aufsatz ein Dichtmittel, insbesondere ein Dichtring, angeordnet ist. Auch der Dichtring verhindert das Eindringen von Luft in die Milchverpackung oder den Milchbehälter. Der Dichtring erfüllt ferner die Aufgabe eines Führungselementes und die Aufgabe eines Abstreifers, wenn die Milchlanze bewegt wird.

Damit die Milch der Milchverpackung vollständig entnehmbar ist, weist das Ansaugrohr am Entnahmeende einen Rand auf, der in einem Winkel größer als 0° und kleiner als 90° zur Längsrichtung verläuft, vorzugsweise in einem Winkel im Bereich von 10° bis 40°. Dadurch bleibt auch bei am Boden der Milchverpackung anliegendem Ansaugrohr eine Öffnung zwischen dem Boden und dem Rand bestehen, durch die die Milch in den Innenraum des Ansaugrohrs eingesogen werden kann. Der Rand ist bevorzugt stumpf ausgebildet, um den Boden nicht zu beschädigen.

Die Aufgabe wird weiterhin gelöst mit einem Kaffeeautomaten mit einer solchen Milchlanze. Die Milchlanze ist bevorzugt lösbar an einer Milchleitung des Kaffeeautomaten angeordnet. Bevorzugt ist sie mit ihrem Anschlussadapter in diese eingeführt. Dadurch ist sie separat nutzbar und austauschbar. Zum Reinigen der Milchleitung ist sie von dieser lösbar, so dass die Milchlanze der Milchverpackung oder einem Milchbehälter nicht dafür entnommen werden muss, sondern vorher von der Milchleitung gelöst werden kann. Es ist aber auch eine Ausführungsform des Kaffeeautomaten bevorzugt, bei der die Milchlanze unlösbar an die Milchleitung angeschlossen ist.

Im Folgenden wird die Erfindung anhand von Figuren beschrieben. Die Figuren sind lediglich beispielhaft und schränken den allgemeinen Erfindungsgedanken nicht ein.
- Fig. 1: zeigt schematisch einen Kaffeeautomaten mit einer erfindungsgemäßen Milchlanze, die in eine Milchverpackung eingeführt ist;
- Fig. 2: zeigt eine Anordnung einer Milchverpackung und einer in diese eingeführte erfindungsgemäße Milchlanze in einer Seitenansicht;
- Fig. 3: zeigt in (a) die Milchlanze der Fig. 2, in (b) die Milchlanze der Fig. 2 in einer explosionsartigen Ansicht, in (c) eine perspektivische Ansicht der Milchlanze der Fig. 2 mit einem entlang eines Ansaugrohrs verschobenen Aufsatz, und in (d) einen Ausschnitt des Ansaugrohrs; und
- Fig. 4: zeigt in (a) einen Ausschnitt einer Anordnung einer Milchverpackung und einer weiteren Ausführungsform einer erfindungsgemäßen Milchlanze in einer perspektivischen Ansicht, und in (b) einen Ausschnitt der Anordnung aus (a) in einer Seitenansicht.

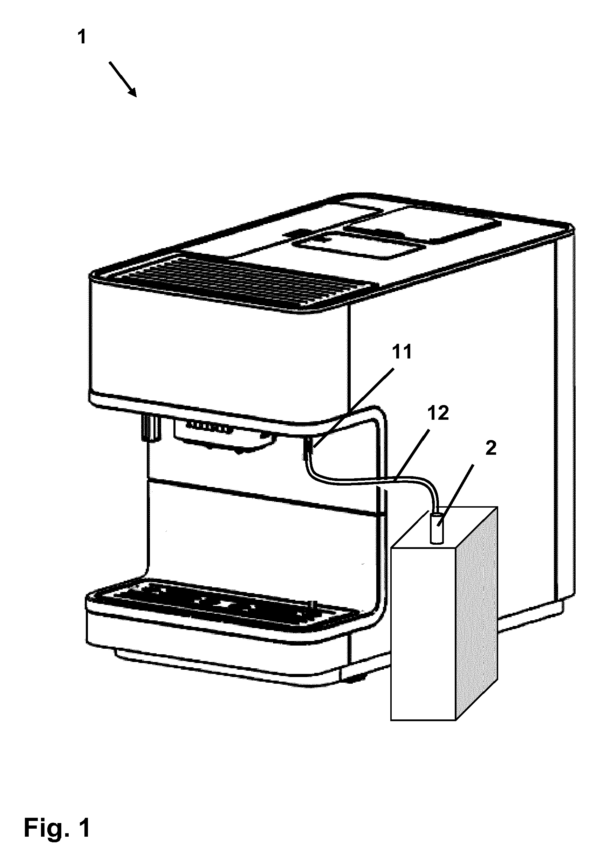

Fig. 1 zeigt einen Kaffeeautomaten 1. Es handelt sich um einen Kaffeevollautomaten. Im Folgenden werden die Begriffe Kaffeeautomat 1 und Kaffeevollautomat synomym verwendet. Am Kaffeevollautomaten 1 ist ein Einlass 11 zum Ansaugen von Milch (nicht dargestellt) vorgesehen, an den eine Milchleitung 12 angeschlossen ist. Die Milchleitung 12 ist als Schlauch, und daher flexibel, ausgebildet. Die Milchleitung 12 ist an eine Milchlanze 2 angeschlossen, die in eine Milchverpackung 3 eingeführt ist.

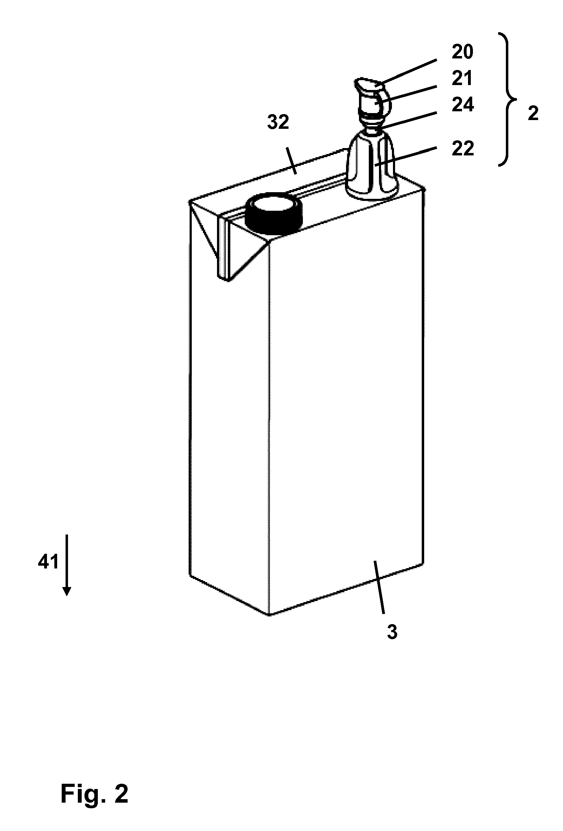

Fig. 2 zeigt die Milchverpackung 3 mit einer erfindungsgemäßen, in die Milchverpackung 3 eingeführten Milchlanze 2 in einer perspektivischen Ansicht. Die Milchlanze 2 ist neben einer Ausgießöffnung 31 der Milchverpackung 3 in eine Einführrichtung 41 in einen Innenraum (nicht gezeigt) der Milchverpackung 3 eingeführt. Sie weist einen Aufsatz 22 auf, der auf eine Wand 32 der Milchverpackung 3 aufgesetzt ist.

Sichtbar ist zudem ein Anschlussadapter 21, an den die Milchleitung 12 des Kaffeeautomaten 1 anschließbar ist. Der Anschlussadapter 21 ist durch einen Verschlussstopfen 20 verschlossen, so dass keine Luft in den Innenraum der Milchverpackung 3 eindringen kann. Zum Anschließen der Milchleitung 12 muss der Verschlussstopfen 20 vom Anschlussadapter 21 gelöst werden.

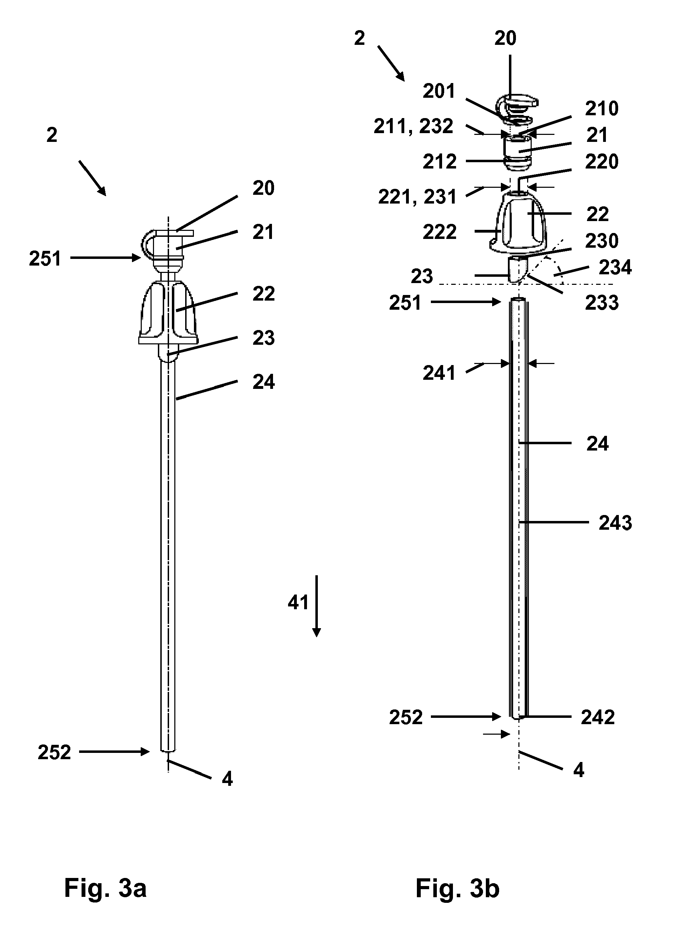

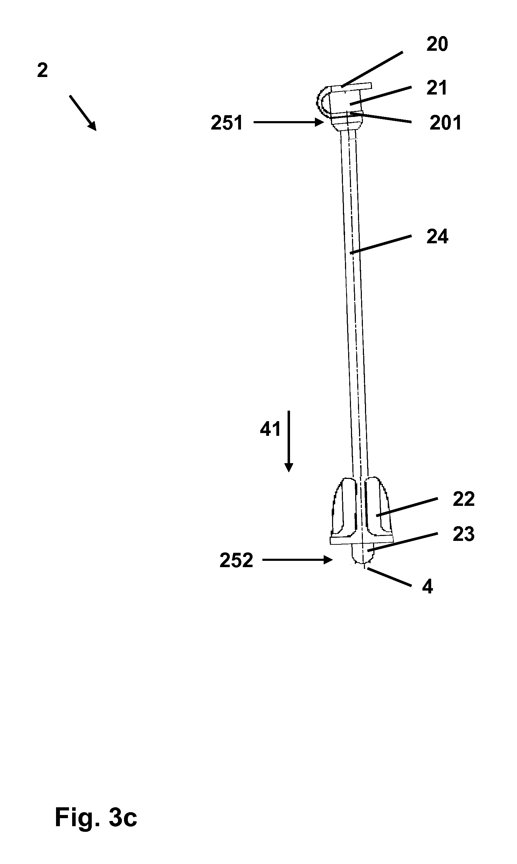

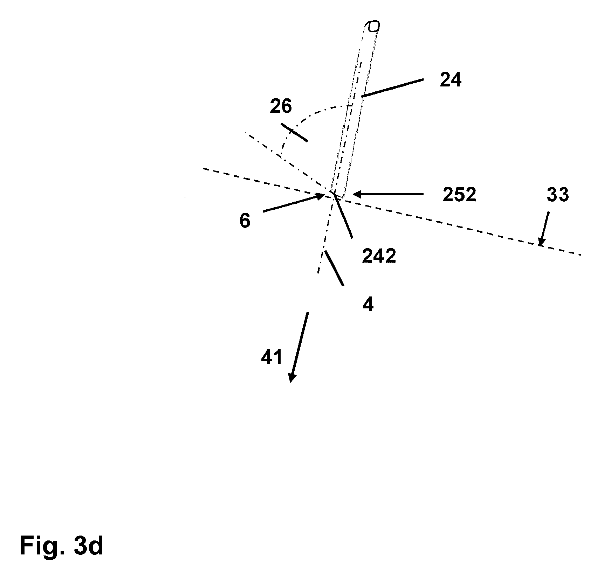

Der Anschlussadapter 21 ist an einem Anschlussende 251 (s. Fig. 3) eines Ansaugrohres 24 angeordnet.

In Fig. 3 (a) ist die Milchlanze 2 der Fig. 2 dargestellt. Fig. 3 (b) zeigt die Milchlanze 2 in einer explosionsartigen Darstellung. Dabei ist das Ansaugrohr 24 in einem Schnittbild gezeigt. Fig. 3 (c) zeigt die Milchlanze 2 mit entlang dem Ansaugrohr 24 verschobenem Aufsatz 22. Und Fig. 3 (d) zeigt schematisch einen Ausschnitt des Ansaugrohres 24 an einem Entnahmeende 252.

Die Milchlanze 2 weist das Ansaugrohr 24 auf. Das Ansaugrohr 24 erstreckt sich geradlinig in eine Längsrichtung 41. Es erstreckt sich von dem Anschlussende 251 in die Längsrichtung 41 zu dem Entnahmeende 252. In Längsrichtung 41 weist das Ansaugrohr 24 eine Durchgangsbohrung 243 auf. Es ist daher hohlzylindrisch ausgebildet. Es erstreckt sich in diesem Ausführungsbeispiel konzentrisch zu einer Achse 4 und weist einen ringförmigen Querschnitt auf. Prinzipiell ist aber auch ein Ansaugrohr 24 mit einem anderen Querschnitt, beispielsweise einem rechteckigen oder ovalen Querschnitt, verwendbar.

Zudem weist die Milchlanze 2 den Aufsatz 22 auf. Der Aufsatz 22 weist ebenfalls eine Durchgangsbohrung 220 auf, die sich in die Längsrichtung 41 erstreckt. Ein Innendurchmesser 221 der Durchgangsbohrung 220 des Aufsatzes 22 ist größer als ein Außendurchmesser 241 des Ansaugrohres 24 ausgebildet. Dadurch ist das Ansaugrohr 24 durch die Durchgangsbohrung 220 des Aufsatzes 22 hindurch führbar. Bei durch die Durchgangsbohrung 220 des Aufsatzes 22 hindurch geführtem Ansaugrohr 24 ist der Aufsatz 22 in und gegen die Längsrichtung 41 am Ansaugrohr 24 verschieblich angeordnet.

In der Durchgangsbohrung 220 des Aufsatzes 22 sind bevorzugt Dichtmittel (nicht gezeigt), beispielsweise Dichtringe, vorgesehen, die zum Verschließen eines zwischen dem Ansaugrohr 24 und dem Aufsatz 22 vorhandenen Spaltes vorgesehen sind. Dadurch kann weder Luft noch Milch durch den Spalt entweichen.

Am Anschlussende 251 des Ansaugrohres 24 ist der Anschlussadapter 21 angeordnet. Auch er weist eine Durchgangsbohrung 210 auf, die sich in die Längsrichtung 41 erstreckt. Dabei ist ein Innendurchmesser 211 der Durchgangsbohrung 210 des Anschlussadapters 21 etwa so groß wie der Außendurchmesser 241 des Ansaugrohres 24. Dadurch ist der am Ansaugrohr 24 angeordnete Anschlussadapter 21 sehr fest am Ansaugrohr 24 angeordnet. Er bildet einen Anschlag, der verhindert, dass das Ansaugrohr 24 ungewollt durch den Aufsatz 22 hindurch, insbesondere in die Milchverpackung 3 oder einen Milchbehälter, rutscht. Das Ansaugrohr 24 ist in den Anschlussadapter 21 eingeführt. Der Anschlussadapter 21 ist bevorzugt aus einem elastischen Kunststoff hergestellt. Dadurch haftet er am Ansaugrohr 24, bleibt aber, beispielsweise zu Reinigungszwecken, vom Ansaugrohr 24 lösbar.

Es ist aber auch bevorzugt, dass der Anschlussadapter 21 unlösbar am Ansaugrohr 24 angeordnet, insbesondere einstückig mit diesem gefertigt, ist.

Um das Ansaugrohr 24 verschließen, und die Milchverpackung 3 luftdicht, beispielsweise in einem Kühlschrank (nicht gezeigt), abstellen zu können, weist die Milchlanze 2 den Verschlussstopfen 20 auf. Mit dem Verschlussstopfen 20 ist die Durchgangsbohrung 210 des Anschlussadapters 21 verschließbar. Der Verschlussstopfen 20 ist mithilfe eines Befestigungsringes 201, der in eine Ringnut 212 des Anschlussadapters 21 eingelegt ist, verliersicher am Anschlussadapter 21 angeordnet.

Die Milchlanze 2 weist ein Messerelement 23 zum Durchtrennen der Wand 32 der Milchverpackung 3 auf. Das Messerelement 23 weist dafür eine scharfe Schneide 233 auf. Es erstreckt sich in die Längsrichtung 41. Um die Wand 32 mit dem Messerelement 23 vollumfänglich um das Ansaugrohr 24 herum durchtrennen zu können, ist das Messerelement 23 konzentrisch zur Achse 4 angeordnet und weist eine Durchgangsbohrung 230 auf. Die Durchgangsbohrung 230 weist einen größeren Innendurchmesser 232 auf als der Außendurchmesser 241 des Ansaugrohres 24. Dadurch ist das Ansaugrohr 24 durch die Durchgangsbohrung 230 des Messerelementes 23 hindurch führbar. Das Messerelement 23 ist in und gegen die Längsrichtung 41 entlang dem Ansaugrohr 24 verschieblich angeordnet.

Das Messerelement 23 ist am Aufsatz 22 angeordnet. Es ist in die Durchgangsbohrung 220 des Aufsatzes 22 eingesetzt/eingeführt, beispielsweise mittels einer Presspassung. Dafür ist der Innendurchmesser 221 des Aufsatzes 22 zumindest bereichsweise etwa so groß wie ein Außendurchmesser 231 des Messerelementes 23. Es ist aber auch eine einstückige Herstellung des Messerelementes 23 und des Aufsatzes 22 bevorzugt.

Da das Messerelement 23 am Aufsatz 22 angeordnet ist, sind sie gemeinsam entlang dem Ansaugrohr 24 verschiebbar.

Um der Milchverpackung 3 Milch mit der Milchlanze 2 entnehmen zu können, wird das Messerelement 23 mit dem Aufsatz 22 in Längsrichtung 41 entlang dem Ansaugrohr 24 etwa bis zum Entnahmeende 252 geschoben. Den am Entnahmeende 252 angeordneten Aufsatz 22 mit dem Messerelement 23 zeigt die Fig. 3 (c). Das Handhaben des Aufsatzes 22 wird für den Bediener vereinfacht durch Rippen 222, die am Aufsatz 22 angeordnet sind, so dass dieser griffiger ist.

Dann wird der Aufsatz 22 auf die Wand 32 der Milchverpackung 3 aufgesetzt, wobei das Messerelement 23 die Wand 32 durchstößt und vollumfänglich um das Ansaugrohr 24 herum durchtrennt. Anschließend wird das Ansaugrohr 24 in Einführrichtung 41 in die Milchverpackung 3 eingeschoben, bis es mit seinem Entnahmeende 252 am Boden 33 (s. Fig. 3 (d)) der Milchverpackung 3 anliegt, oder der Anschlussadapter 21 an Aufsatz 22 anschlägt. Ein Milchschlauch 12 eines Kaffeeautomaten 1 kann anschließend am Anschlussadapter 21 angeschlossen werden. Das Ansaugrohr 24 wird in Längsrichtung 41 in die Milchverpackung 3 eingeführt. Die Längsrichtung 41 der Michlanze 2 ist daher die Einführrichtung 41.

Um das Durchstoßen und Durchtrennen der Wand 32 für den Bediener zu vereinfachen, weist die Schneide 233 des Messerelementes 23 einen Schneidewinkel 234 zur Längsrichtung 41 auf, der größer als 0° und kleiner als 90° ist. Dadurch wird die Wand 32 zunächst punktförmig durchstoßen und bei einem weiteren Verschieben des Messerelementes 23 in Längsrichtung 41 kontinuierlich weiter durchtrennt.

Damit das Ansaugrohr 24 bei einem Berührkontakt mit dem Boden 33 den Boden 3 nicht beschädigt, weist es an seinem Entnahmeende 252 einen Rand 241 auf, der stumpf ausgebildet ist.

Ferner weist der Rand 241 einen Winkel 26 zur Längsrichtung 41 auf, der größer als 0°, aber kleiner als 90° ist. Der Winkel 26 beträgt bevorzugt 30° - 70°, besonders bevorzugt etwa 45°. Wenn das Ansaugrohr 24 am Boden 33 des Milchbehälters 3 anliegt, verbleibt daher eine Ansaugöffnung 6, durch die Milch in die Durchgangsbohrung 243 des Ansaugrohrs 24 eingesogen werden kann. Fig. 3 (d) zeigt dies schematisch, wobei der Boden 33 der Milchverpackung 3 durch eine gestrichelte Linie dargestellt ist.

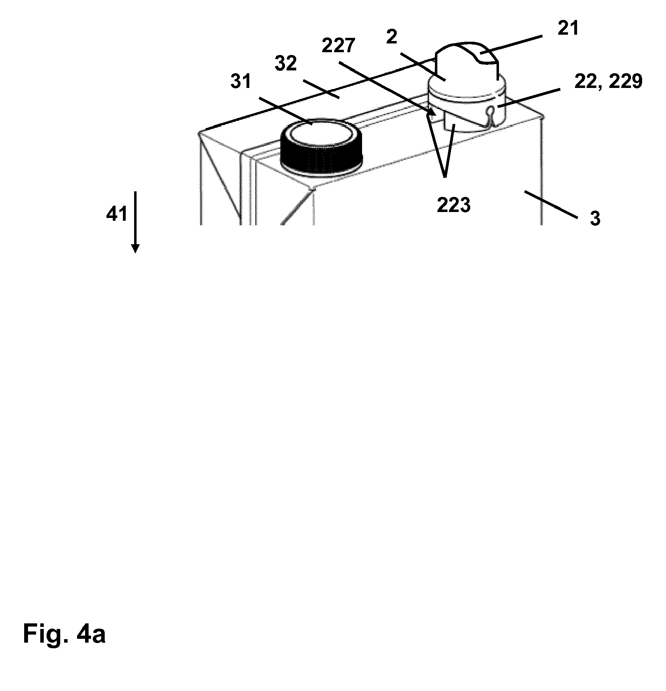

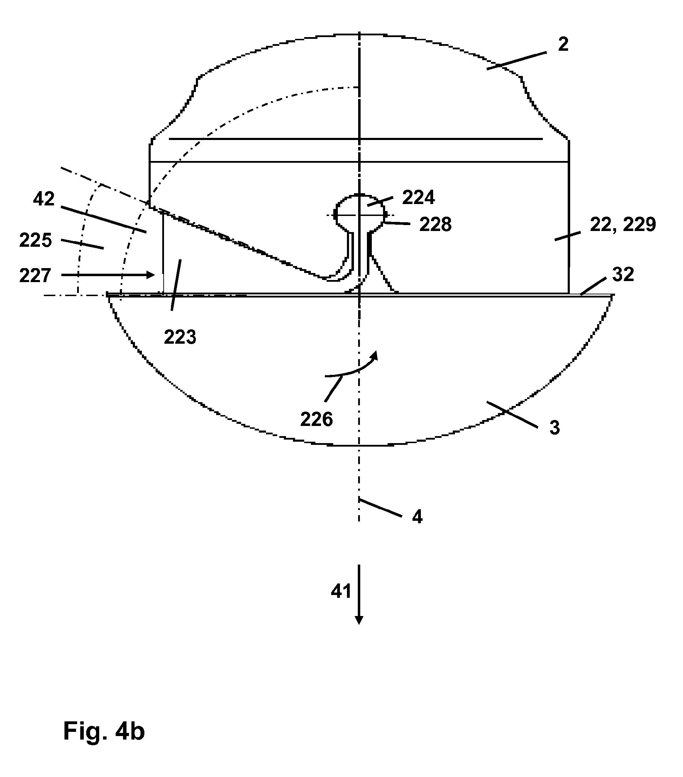

Fig. 4 zeigt in (a) einen Ausschnitt einer Anordnung der Milchverpackung 3 und einer weiteren Ausführungsform einer erfindungsgemäßen Milchlanze 2 in einer perspektivischen Ansicht, und in (b) einen Ausschnitt der Anordnung aus (a). Sichtbar sind jeweils der Aufsatz 22 und ein Ausschnitt aus dem Anschlussadapter 21.

Der Aufsatz 22 weist einen Grundkörper 229 auf, an dem eine keilförmige Ausnehmung 227 vorgesehen ist. In der keilförmigen Ausnehmung 227 sind zwei Keilelemente 223 angeordnet. Die Keilelemente 223 sind jeweils mit einem Drehgelenk 224 in Aufnahmen 228 des Aufsatzes 22 gelagert. Sie sind um die Achse 4 in entgegen gesetzte Drehrichtungen 226 drehbar.

Bei der dargestellten Anordnung ist der Aufsatz 22 auf eine Milchverpackung 3 aufgesetzt, die eine Wand 32 aufweist, die sich in einem Erstreckungswinkel 42 quer zur Achse 4 erstreckt. Dafür sind die Keilelemente 223 in der Ausnehmung 227 in einer Grundposition (nicht bezeichnet) angeordnet. In der Grundposition weist die Ausnehmung 227 einen Winkel 225 zur Wand 32 auf, den die Keilelemente 223 ausfüllen.

Die Keilwinkel 223 werden durch Drehen um einen Drehwinkel (nicht dargestellt) jeweils in ihre Drehrichtung 226 um die Achse 4 in eine Verstellposition (nicht gezeigt) aus der Ausnehmung 227 heraus gedreht. Der Drehwinkel beträgt in der Verstellposition zumindest 90° oder größer. Der Aufsatz 22 ist dann auch auf eine Wand 32 einer Milchverpackung 3 aufsetzbar, die einen Erstreckungswinkel 42 zur Achse 4 aufweist, der kleiner als 90° ist.

### Bezugszeichenliste

- 1: Kaffee(voll-)automat
- 11: Einlass
- 12: Milchleitung, Schlauch
- 2: Milchlanze
- 20: Verschlussstopfen
- 201: Befestigungsring
- 21: Anschlussadapter
- 210: Durchgangsbohrung des Anschlussadapters
- 211: Innendurchmesser der Durchgangsbohrung
- 212: Ringnut
- 22: Aufsatz
- 220: Durchgangsbohrung des Aufsatzes
- 221: Innendurchmesser der Durchgangsbohrung
- 222: Rippe
- 223: Keilelement
- 224: Drehgelenk
- 225: Keilwinkel
- 226: Drehrichtung
- 227: Ausnehmung
- 228: Aufnahme
- 229: Grundkörper
- 23: Messerteil, Messerring
- 230: Durchgangsbohrung des Messerteils
- 231: Außendurchmesser des Messerteils
- 232: Innendurchmesser der Durchgangsbohrung
- 233: Schneide
- 234: Schneidewinkel
- 24: Ansaugrohr
- 241: Außendurchmesser des Ansaugrohrs
- 242: Rand des Ansaugrohrs
- 243: Durchgangsbohrung des Ansaugrohrs, Innenraum
- 251: Anschlussende
- 252: Entnahmeende
- 26: Winkel
- 3: Milchverpackung
- 31: Ausgießöffnung
- 32: Wand der Milchverpackung
- 33: Boden
- 4: Achse
- 41: Längsrichtung
- 42: Erstreckungswinkel
- 6: Ansaugöffnung

## Patentansprüche

1. Milchlanze (2) für einen Kaffeeautomaten (1), mit einem Ansaugrohr (24), das von einem Anschlussende (251) in eine Längsrichtung (41) zu einem Entnahmeende (252) verläuft, mit einem Messerelement (23), geeignet zum Durchstechen der Wand (32) der Milchverpackung (3),
**dadurch gekennzeichnet, dass**
das Messerelement (23) entlang dem Ansaugrohr (24) verschiebbar ist.

2. Milchlanze (2) nach Anspruch 1, **dadurch gekennzeichnet, dass** das Messerelement (23) eine Durchgangsbohrung (230) zur Aufnahme des Ansaugrohrs (24) aufweist.

3. Milchlanze (2) nach einem der vorherigen Ansprüche, **dadurch gekennzeichnet, dass** das Messerelement (23) eine scharfe Schneide (233) aufweist.

4. Milchlanze (2) nach einem der vorherigen Ansprüche, **dadurch gekennzeichnet, dass** die Schneide (233) in einem Schneidewinkel (234) größer als 0° und kleiner als 90° zur Längsrichtung (41) verläuft.

5. Milchlanze (2) nach einem der vorherigen Ansprüche, **dadurch gekennzeichnet, dass** sie einen Aufsatz (22) aufweist.

6. Milchlanze (2) nach einem der vorherigen Ansprüche, **dadurch gekennzeichnet, dass** der Aufsatz (22) eine Durchgangsbohrung (220) zur Aufnahme des Ansaugrohrs (24) aufweist.

7. Milchlanze (2) nach einem der vorherigen Ansprüche, **dadurch gekennzeichnet, dass** das Messerelement (23) am Aufsatz (22) angeordnet oder einstückig mit dem Aufsatz (22) gefertigt ist.

8. Milchlanze (2) nach einem der vorherigen Ansprüche, **dadurch gekennzeichnet, dass** am Anschlussende (251) des Ansaugrohrs (24) ein Anschlussadapter (21), insbesondere unverschieblich, angeordnet ist.

9. Milchlanze (2) nach einem der vorherigen Ansprüche, **dadurch gekennzeichnet, dass** der Anschlussadapter (21) verschließbar ist.

10. Milchlanze (2) nach einem der vorherigen Ansprüche, **dadurch gekennzeichnet, dass** in der Durchgangsbohrung (220) zwischen dem Ansaugrohr (24) und dem Aufsatz (22) eine Dichtung angeordnet ist.

11. Milchlanze (2) nach einem der vorherigen Ansprüche, **dadurch gekennzeichnet, dass** das Ansaugrohr (24) am Entnahmeende (252) einen Rand (241) aufweist, der in einem Winkel (26) größer als 0° und kleiner als 90° zur Längsrichtung (41) verläuft.

12. Milchlanze (2) nach einem der vorherigen Ansprüche, **dadurch gekennzeichnet, dass** der Rand (241) stumpf ausgebildet ist.

13. Milchlanze (2) nach einem der vorherigen Ansprüche, **dadurch gekennzeichnet, dass** der Aufsatz (22) Rippen (227) aufweist.

14. Kaffeeautomat (1) mit einer Milchlanze (2) gemäß einem der Ansprüche 1 bis 13.
